# EUROPEAN PATENT SPECIFICATION

(11) **EP 3 882 188 B1**
(45) Date of publication and mention of the grant of the patent: **23.04.2025**
(21) Application number: 19883863.3
(22) Date of filing: 12.11.2019
(51) Int. Cl.: B29C 53/58, B65H 54/02, B29C 70/16, B29C 70/32, B29C 70/54, B29C 53/70, C08J 5/24

(54) **METHOD FOR CREATING WINDING DATA, AND FILAMENT WINDING DEVICE**
VERFAHREN ZUR ERZEUGUNG VON WICKELDATEN UND FILAMENTAUFWICKELVORRICHTUNG
PROCÉDÉ DE CRÉATION DE DONNÉES D'ENROULEMENT, ET DISPOSITIF D'ENROULEMENT DE FILAMENT

(30) Priority: 15.11.2018 JP 2018214987
(43) Date of publication of application: 22.09.2021
(73) Proprietor: Murata Machinery, Ltd., Kyoto-shi, Kyoto 601-8326 (JP)
(72) Inventor: GOYUDE, Masatsugu, Kyoto-shi, Kyoto 612-8686 (JP); IKEZAKI, Shu, Kyoto-shi, Kyoto 612-8686 (JP); TANIGAWA, Motohiro, Kyoto-shi, Kyoto 612-8686 (JP); UOZUMI, Tadashi, Kyoto-shi, Kyoto 612-8686 (JP); WADA, Hirotaka, Kyoto-shi, Kyoto 612-8686 (JP); MIYAJI, Shota, Kyoto-shi, Kyoto 612-8686 (JP); MIURA, Takahiro, Kyoto-shi, Kyoto 612-8686 (JP); TANAKA, Makoto, Kyoto-shi, Kyoto 612-8686 (JP); NAKAMURA, Daigoro, Kyoto-shi, Kyoto 612-8686 (JP); MATSUURA, Tetsuya, Kyoto-shi, Kyoto 612-8686 (JP)
(74) Representative: Weickmann & Weickmann PartmbB
(86) International application number: PCT/JP2019/044239
(87) International publication number: WO 2020/100852

(56) References cited:
- JP-A- 2006 150 879
- JP-A- 2006 150 879
- JP-A- 2006 218 777
- JP-A- 2006 218 777
- JP-A- 2018 144 407
- JP-A- 2018 144 407
- JP-A- H07 156 143
- JP-A- H07 156 143
- US-A1- 2013 320 129

## Description

### TECHNICAL FIELD

The present invention relates to a control of a filament winding apparatus.

### BACKGROUND ART

A filament winding apparatus for winding a fiber bundle onto an outer peripheral surface of a core material has been conventionally known. PTL 1 discloses this kind of filament winding apparatus.

The filament winding apparatus of PTL 1 including a device for performing a repetitive operation and a device for performing a divergent operation, is configured that the device for performing the repetitive operation and the device for performing the divergent operation restart the operations at a different restart position at a time of restarting if the operations are stopped due to a power failure in the middle of a series of operations to wind a fiber bundle.

The nearest state of the art regarding the present invention is disclosed in US 2013/0320129 A1. This document already discloses a winding data creation method for a filament winding apparatus, the filament winding apparatus including a rail extending in a first direction, a winding path that winds a fiber bundle onto an outer peripheral surface of a core material, a winding drive motor that drives the winding part in rotation around a winding rotational axis along an axial direction of the core material, and a control section that controls the winding drive motor.
This document, however, does not teach how to create the winding data in detailed steps. Accordingly, it is an object of the present invention to provide the detailed steps for an appropriate winding data creation method. This problem is solved with the features of present claims 1 and 9.

### CITATION LIST

### PATENT LITERATURE

PTL 1: Japanese Patent No. 5613588

### SUMMARY OF THE INVENTION

### PROBLEMS TO BE SOLVED BY THE INVENTION

The filament winding apparatus as disclosed in PTL 1 performs hoop winding in which an angle (winding angle) for winding a fiber bundle is substantially perpendicular to a front-rear direction of the apparatus, or performs helical winding in which the winding angle with respect to the front-rear direction of the apparatus has a predetermined value. Such filament winding apparatus is generally configured to wind the fiber bundle around one single core material while keeping the constant winding angle with respect to the core material.

For products manufactured by filament winding, taking into consideration the use, etc., there may be a need that the strength of the products is flexibly changed in a longitudinal direction of the core material. However, the conventional winding method as disclosed in PTL 1 and the like cannot meet such need.

The present invention has been made in view of the circumstances described above, an object of the present invention is to, in a filament winding apparatus, wind a fiber bundle around a core material while partially varying a winding angle with respect to the core material.

### MEANS FOR SOLVING THE PROBLEMS AND EFFECTS THEREOF

Problems to be solved by the present invention are as described above, and next, means for solving the problems and effects thereof will be described.

According to a first aspect of the present invention, a winding data creation method with the following configuration is provided. That is, the winding data creation method is to create a winding data for a filament winding apparatus including a rail extending in a first direction, a winding part that winds a fiber bundle onto an outer peripheral surface of a core material, a winding drive motor that drives the winding part in rotation around a winding rotational shaft along an axial direction of the core material, and a control section that controls the winding drive motor. The winding data creation method includes an initial setting value input step, a point setting step, a winding angle setting step, and a winding rotational speed calculation step. The initial setting value input step is to input an initial setting value including a length in a first direction of the core material in the first direction. The point setting step is to set a plurality of points so as to divide the length of the core material in the first direction. The winding angle setting step is to set a target winding angle that is an angle defined by an axial direction of the core material, and the fiber bundle wound around the core material between two points adjacent to each other in the first direction. The winding rotational speed calculation step is to calculate, at least based on the initial setting value to be inputted and the target winding angle to be set, a target winding rotational speed of the winding drive motor between the two points adjacent to each other, respectively.

Accordingly, the target winding angle with respect to the core material can be partially changed, which can finish products with partially different strength in a longitudinal direction of the core material, with just one series of winding work.

The winding data creation method is preferably configured as follows. That is, the filament winding apparatus includes a posture adjustment motor that adjusts a posture of the winding part in the first direction. The winding data creation method includes a posture information input step of inputting a target posture information of the winding part at each of the points that is set in the point setting step. The winding rotational speed calculation step is to calculate the target winding rotational speed of the winding drive motor, based on the initial setting value, the target winding angle, and the target posture information inputted in the posture information input step.

Accordingly, the fiber bundle can be wound around the core material having a curved shape, with the specified winding angle.

In the posture information input step of the winding data creation method, an operator conducts teaching in a state of adjusting the posture of the winding part such that the winding rotational shaft of the winding part coincides with a shaft of the core material, at each of the points that is set in the point setting step, to input the target posture information.

In this case, the posture information corresponding to an actual shape of the core material can be obtained.

In the posture information input step of the winding data creation method, based on a pre-inputted 3D data of the core material, the posture of the winding part at each of the points that is set in the point setting step can be also obtained as the target posture information by calculation.

In this case, the target posture information can be easily obtained without actually moving the winding part. Therefore, a pre-setting work is simplified even when there are many points.

In the posture information input step of the winding data creation method, it is preferable to input the target posture information at each point, in a case where the winding part is moved to one side in the first direction relative to the core material and a case where the winding part is moved to the other side in the first direction relative to the core material.

Accordingly, even when the posture of the winding part suitable for winding of the fiber bundle is varied depending on an orientation in which the winding part is moved relative to the core material in the first direction, winding of the fiber bundle with the various postures can be accepted by inputting the posture information for the orientation of relative movement.

In the winding data creation method, each point can be set at equal intervals in the first direction.

In this case, each point can be easily set.

The winding data creation method is preferably configured as follows. That is, the initial setting value inputted in the initial setting value input step further includes the number of fiber bundles, a width of the fiber bundle, a diameter of the core material.

This can more appropriately calculate the target winding rotational speed of the winding drive motor in accordance with winding conditions, respectively.

The winding data creation method preferably includes a displaying step of displaying a rate of coverage of the fiber bundle wound onto an outer peripheral surface of the core material, the rate of coverage calculated based on the winding angle to be set.

Accordingly, the operator can easily confirm the rate of coverage of the fiber bundle wound in accordance with the winding data.

According to a second aspect of the present invention, a filament winding apparatus with the following configuration is provided. That is, the filament winding apparatus includes a rail, a winding part, a winding drive motor, a drive control section, and a data creation section. The rail extends in a first direction. The winding part winds a fiber bundle onto an outer peripheral surface of a core material. The winding drive motor drives the winding part in rotation around a winding rotational shaft along an axial direction of the core material. The drive control section controls the winding drive motor. The data creation section creates data for controlling the winding drive motor. An initial setting value, a plurality of points, and a target winding angle can be set in the data creation section. The initial setting value includes a length of the core material in the first direction. The plurality of points divides the length of the core material in the first direction. The target winding angle is an angle defined by an axial direction of the core material and the fiber bundle between two points adjacent to each other in the first direction. The data creation section calculates, at least based on the initial setting value to be inputted and the target winding angle to be set, a target winding rotational speed of the winding drive motor between the two points adj acent to each other, respectively.

Accordingly, the target winding angle with respect to the core material can be partially changed, which can finish products with partially different strength in a longitudinal direction of the core material, with just one series of winding work.

### BRIEF DESCRIPTION OF THE DRAWINGS

[FIG. 1] A perspective view showing an overall configuration of a filament winding apparatus according to one embodiment of the present invention.
[FIG. 2] An exploded perspective view showing a winding device including a winding unit (hoop winding unit) viewed from the rear.
[FIG. 3] An exploded perspective view showing the winding device viewed from the front.
[FIG. 4] A front view showing the winding device.
[FIG. 5] A perspective view showing a situation in which a posture of the hoop winding unit changes in accordance with a shape of a core material in a process of winding a fiber bundle around the core material.
[FIG. 6] A perspective view showing a configuration of a helical winding unit.
[FIG. 7] A partial enlarged view showing a configuration of the helical winding unit.
[FIG. 8] A cross-sectional perspective view showing a configuration of a central guiding part in the helical winding unit.
[FIG. 9] A flowchart showing a work process for creating a winding data for the filament winding apparatus.
[FIG. 10] An image diagram showing a control data of a control section.
[FIG. 11] A perspective view describing a winding angle.

### EMBODIMENT FOR CARRYING OUT THE INVENTION

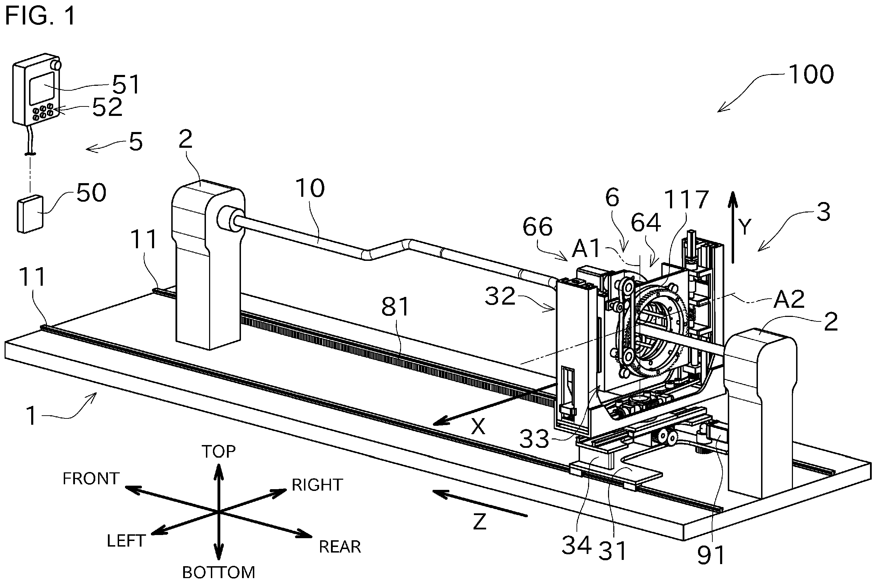

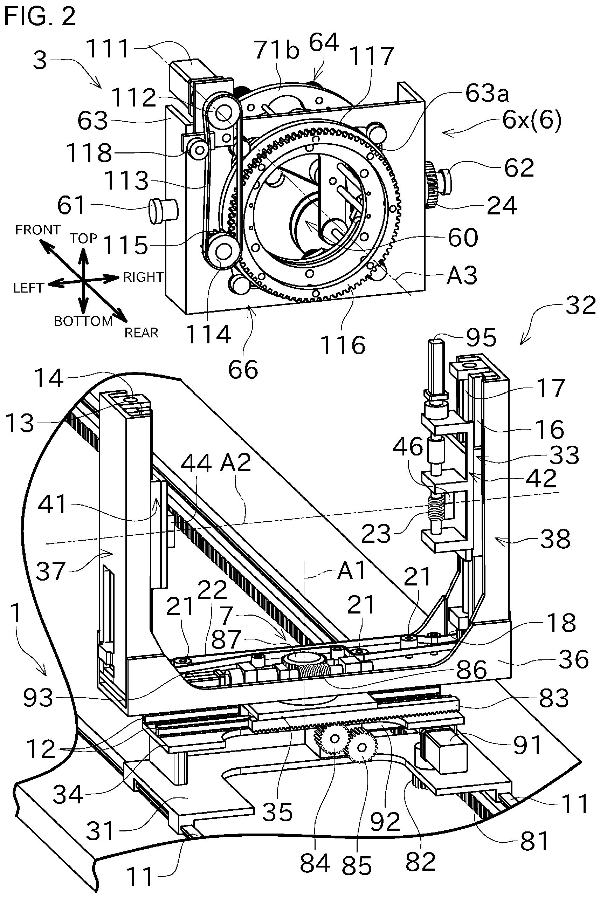

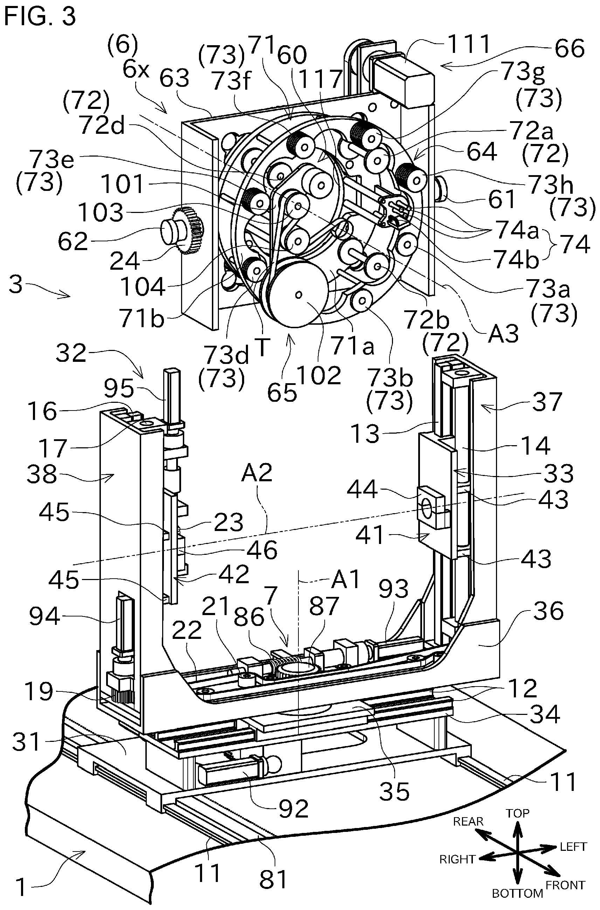

Next, an embodiment of the present invention will be described with reference to the drawings. FIG. 1 is a perspective view showing an overall configuration of a filament winding apparatus 100 according to one embodiment of the present invention. FIG. 2 is an exploded perspective view showing a winding device 3 including a winding unit 6 (hoop winding unit 6x) viewed from the rear. FIG. 3 is an exploded perspective view showing the winding device 3 viewed from the front.

The filament winding apparatus 100 shown in FIG. 1 is an apparatus configured to wind a fiber bundle F onto an outer peripheral surface of a core material 10. The filament winding apparatus 100 includes a travel base 1, core material support devices 2, a winding device 3, and a control section 5.

"Front" in the following description means, in a direction where the travel base 1 extends, a side opposite to a position of a rotary table 117 which will be described later. "Rear" in the following description means, in the direction where the travel base 1 extends, a side where the rotary table 117 is positioned. "Left" and "Right" mean a left side and a right side when facing the front. The definition of these directions is for conveniently describing a positional relationship, etc. between components. An orientation, etc. for arranging the filament winding apparatus 100 is not limited.

As described later, the core material 10 has a curved shape, but a front-rear direction (first direction) is a direction substantially along an overall longitudinal direction of the core material 10. A left-right direction (second direction) is orthogonal to the front-rear direction. A vertical direction (third direction) is orthogonal to the front-rear direction and the left-right direction respectively.

The travel base 1 is elongated in the front-rear direction. The travel base 1 supports the core material support devices 2, the winding device 3 and the like from below in the vertical direction. The travel base 1 includes a plurality of rails 11 extending in the front-rear direction. Each of the rails 11 is provided on an upper surface of the travel base 1. The winding device 3 is mounted to the rails 11 so as to move back and forth in the front-rear direction along the rails 11.

The core material support devices 2 support the core material 10. Two core material support devices 2 are arranged side by side with a predetermined distance in the front-rear direction. The pair of core material support devices 2 is arranged so as to face each other. Each core material support device 2 is fixed to the travel base 1.

The two core material support devices 2 support the core material 10 such that an intermediate portion in a longitudinal direction of the core material 10 is raised above the travel base 1. One of the two core material support devices 2 holds a front end (one end in the longitudinal direction) of the core material 10, and the other core material support device 2 holds a rear end (the other end in the longitudinal direction) of the core material 10.

When the two core material support devices 2 support the core material 10, the core material 10 basically extends in the front-rear direction. An appropriate gap is formed in the vertical direction between the upper surface of the travel base 1 and the core material 10 supported by the two core material support devices 2.

The core material 10 has an elongated shape, for example, with its cross section having a circular rod-like shape. In this embodiment, the core material 10, with its longitudinal direction three-dimensionally changing, has a curved shape.

The core material 10 can be mounted to and detached from each core material support device 2. Therefore, in accordance with a desired shape, the core material 10 having various shapes can be replaced and mounted to the filament winding apparatus 100.

The winding device 3 is configured as a device for winding a fiber bundle onto the outer peripheral surface of the core material 10, while traveling along the rails 11. The fiber bundle is made of, for example, fiber materials such as carbon fiber. The fiber bundle may be impregnated with liquid resin (for example, uncured thermosetting resin).

The winding device 3 is provided, on the travel base 1, between the two core material support devices 2. The winding device 3 keeps a state in which the core material 10 supported by the two core material support devices 2 penetrates the winding device 3 when moving back and forth in the front-rear direction along the rails 11.

As shown in FIG. 2 and FIG. 3, the filament winding apparatus 100 includes a front-rear traveling drive motor (first drive source) 91, a left-right traveling drive motor (second drive source) 92, a rotary drive motor (third drive source) 93, a lifting motor (fourth drive source) 94, and a pitching drive motor (fifth drive source) 95. Each component in the winding device 3 is driven by each of the above-described drive motors. Details of a configuration for driving will be described later.

The control section 5 shown in FIG. 1 including a controller 50, a display 51, and an operation part 52, controls operations of each component in the winding device 3.

The controller 50 is configured as a control board, for example. The controller 50 is electrically connected to the above-described drive motors for driving each component in the winding device 3. The controller 50 controls each drive motor in accordance with operations of the operation part 52.

The display 51 can display various information regarding a winding work (such as a progress of the winding work).

The operation part 52 is used for manually controlling the front-rear traveling drive motor 91, the left-right traveling drive motor 92, the rotary drive motor 93, the lifting motor 94, the pitching drive motor 95, and a winding drive motor 111, or used for inputting various winding information.

The operator inputs the winding information (an initial setting value, a winding angle, etc.) regarding the core material 10 to be wound, via the operation part 52. Based on the inputted winding information, the control section 5 controls a target rotational speed of the winding unit 6, a target traveling speed in which the winding device 3 travels in the front-rear direction, and a target posture of the winding device 3 corresponding to respective positions in the front-rear direction.

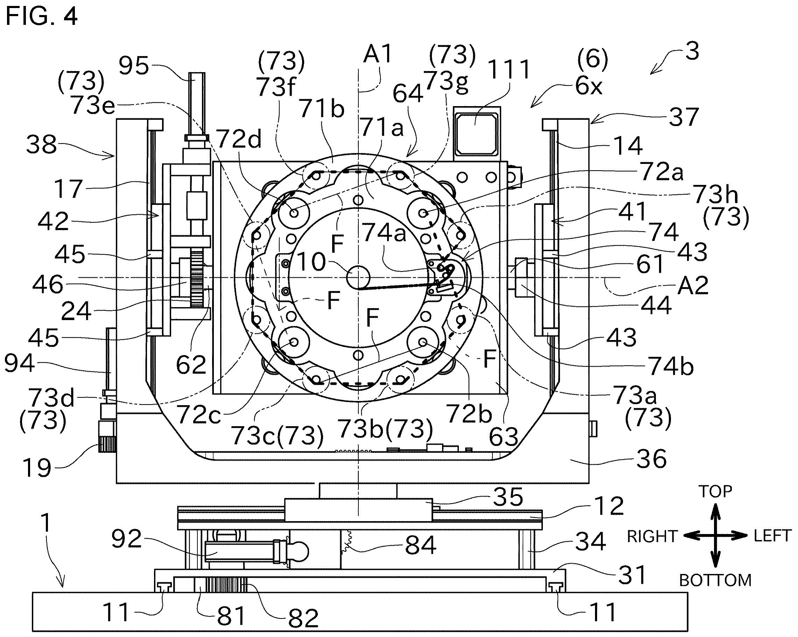

Next, details of the winding device 3 will be described with reference to FIG. 2 to FIG. 4. FIG. 4 is a front view showing the winding device 3.

As shown in FIG. 2 and FIG. 3, the winding device 3 includes a base frame 31, a main frame 32, a lifting frame (sub-frame) 33, and a winding unit (guide unit) 6.

As shown in FIG. 2, the base frame 31 made of a plate-shaped member, is arranged with its thickness direction facing up and down. The base frame 31 is mounted so as to move in the front-rear direction along the rails 11 provided on the upper surface of the travel base 1. The base frame 31 is driven to move back and forth in the front-rear direction by a linear motion mechanism including the front-rear traveling drive motor 91 and a rack and pinion.

Specifically, a front-rear traveling rack 81 extending in the front-rear direction is arranged on the upper surface of the travel base 1. The front-rear traveling rack 81 is fixed to the travel base 1. The front-rear traveling rack 81 has teeth for meshing with the front-rear traveling pinion 82.

The front-rear traveling pinion 82 is rotatably supported below the base frame 31. The front-rear traveling pinion 82 is driven in rotation by the front-rear traveling drive motor 91 provided on the upper surface of the base frame 31.

The front-rear traveling drive motor 91 drives the front-rear traveling pinion 82 in rotation. The front-rear traveling pinion 82 to be rotated moves in the front-rear direction so as to roll with respect to the front-rear traveling rack 81. As a result, the base frame 31 (and thus the winding device 3) moves in the front-rear direction.

A support base 34 for supporting the main frame 32 is provided across an upper surface of the base frame 31. The support base 34 is formed in a substantially U-shape with its lower side open, as viewed in the front-rear direction. Left and right rails 12 extending in the left-right direction are provided on the upper surface of the support base 34.

The main frame 32 is formed in a substantially U-shape with its upper side open, as viewed in the front-rear direction. The main frame 32 arranged above the support base 34 is mounted to the support base 34. The main frame 32 can move back and forth in the left-right direction along the left and right rails 12 provided on the upper surface of the support base 34. The main frame 32 is rotatable around a rotational axis (first rotational axis) A1 extending in the vertical direction, with respect to the support base 34.

The main frame 32 supports the winding unit 6 such that the winding unit 6 can be rotated around a pitching axis (second rotational axis) A2 extending in the left-right direction. **In** the following description, a turning of the winding unit 6 around the pitching axis A2 may be refereed as "pitching".

As shown in FIG. 2 and FIG. 3, the main frame 32 includes a left-right traveling base 35, a base 36, a left arm 37, and a right arm 38.

The plate-like left-right traveling base 35 is mounted so as to move along the left and right rails 12 provided on the upper surface of the support base 34. A left-right traveling rack 83 is fixed on a lower surface of the left-right traveling base 35. The left-right traveling rack 83 has teeth for meshing with a left-right traveling pinion 84.

The left-right traveling pinion 84 is provided above the base frame 31 and below the support base 34. The left-right traveling pinion 84 is supported so as to be rotated around a shaft extending in the front-rear direction. The left-right traveling pinion 84 meshes with a first gear 85 that is arranged in the vicinity of and slightly below the left-right traveling pinion 84. The left-right traveling pinion 84 is driven in rotation due to rotation of the first gear 85.

As shown in FIG. 2 and FIG. 3, the first gear 85 is driven in rotation by the left-right traveling drive motor 92 provided on the upper surface of the base frame 31. The first gear 85 meshes with the left-right traveling pinion 84, and then transmits a rotation driving force from the left-right traveling drive motor 92 to the left-right traveling pinion 84.

The left-right traveling drive motor 92 causes the left-right traveling pinion 84 to be rotated via the first gear 85. The left-right traveling pinion 84 to be rotated feeds the teeth of the left-right traveling rack 83 toward left and right. As a result, the left-right traveling base 35 (and thus the main frame 32) is moved in the left-right direction.

The elongated base 36 is arranged above the left-right traveling base 35. The base 36 is supported by the left-right traveling base 35 so as to be rotated around the rotational axis (first rotational axis) A1 extending in the vertical direction. As the left-right traveling base 35 moves in the left-right direction, the rotational axis A1 accordingly moves in the left-right direction. When the base 36 is not rotated around the rotational axis A1, a longitudinal direction of the base 36 coincides with the left-right direction. That is, when the base 36 is positioned so as to extend in the left-right direction, a rotation angle θV of the base 36 is 0°. In the following, a positional relationship between components will be described, on the basis of a state in which the rotation angle θV of the base 36 is 0°.

The base 36 is formed in a substantially U-shape with its upper side open, as viewed in the left-right direction. A rotary drive motor 93 and a worm gear mechanism 7 are provided on the upper surface of the base 36. The worm gear mechanism 7 includes a worm 86 and a worm wheel 87 meshing with the worm 86.

The worm 86 is supported so as to be rotated around a shaft extending in a direction parallel to the longitudinal direction of the base 36. The worm 86 is driven in rotation by the rotary drive motor 93. Screw teeth for meshing with the teeth on an outer peripheral of the worm wheel 87 are formed on an outer peripheral surface of the worm 86.

The worm wheel 87 is supported on the upper surface of the base 36 so as to be rotated around the rotational shaft A1. The worm wheel 87 is provided so as not to be rotated relative to the left-right traveling base 35.

The rotary drive motor 93 drives the worm 86 in rotation. The worm 86 to be rotated tries to feed the teeth of the worm wheel 87, but the worm wheel 87 cannot be rotated relative to the left-right traveling base 35. Therefore, along with rotation of the worm 86, the base 36 is rotated around the rotational shaft A1 with respect to the worm wheel 87 and the left-right traveling base 35. The rotary drive motor 93 functions as a posture adjustment motor that adjusts a posture of a hoop winding part 64 which will be described later, in the front-rear direction.

In the filament winding apparatus 100 of this embodiment, the base 36 (main frame 32) can be rotated within an range of the angle ±100°. That is, the rotation angle θV that is an angle defined by the longitudinal direction of the base 36 and the left-right direction, meets a condition of -100° ≤ θV ≤ 100°. Accordingly, even when the core material 10 has a portion substantially parallel to the left-right direction, the winding unit 6 (hoop winding part 64) can be oriented along such portion.

The left arm 37 is formed in a substantially U-shape, as viewed in the vertical direction. The left arm 37 arranged at a left end of the base 36 is provided so as to protrude upward from the base 36. A left vertical rail 13 is provided on a right side surface of the left arm 37 so as to extend in the vertical direction. A left screw feeding shaft 14 is rotatably supported on the right side surface of the left arm 37 such that an axial direction of the left screw feeding shaft 14 is oriented to the vertical direction.

The right arm 38 is formed in a substantially U-shape, as viewed in the vertical direction. The right arm 38 arranged at a right end of the base 36 is provided so as to protrude upward from the base 36. A right vertical rail 16 is provided inside the right arm 38 so as to extend in the vertical direction. A right screw feeding shaft 17 is rotatably supported inside the right arm 38 such that an axial direction of the right screw feeding shaft 17 is oriented to the vertical direction.

As shown in FIG. 2, a right rotary drive gear 18 that drives the right screw feeding shaft 17 in rotation is mounted to a lower portion of the right screw feeding shaft 17, so as not to be rotated relative to the right screw feeding shaft 17. The right rotary drive gear 18 meshes with a lifting drive gear 19 (see FIG. 3) that is driven in rotation by the lifting motor 94. The right rotary drive gear 18 is driven in rotation along with rotation of the lifting drive gear 19.

As shown in FIG. 3, the lifting motor 94 is provided below the right arm 38. The lifting motor 94 drives the lifting drive gear 19 in rotation, the lifting drive gear 19 that meshes with the right rotary drive gear 18. As a result, the right screw feeding shaft 17 is rotated.

A toothed pulley (not shown) is mounted at a lower end of the left screw feeding shaft 14 and at a lower end of right screw feeding shaft 17 respectively, so as to be rotated only together. Rotation of the right screw feeding shaft 17 is transmitted to the left screw feeding shaft 14 via transmission pulleys 21 provided in an upper portion of the base 36, and a toothed belt 22. Accordingly, due to driving of the lifting motor 94, the left screw feeding shaft 14 and the right screw feeding shaft 17 are simultaneously rotated around their respective shaft centers in the same orientation and at the same speed.

The lifting frame 33 is mounted to the left arm 37 and the right arm 38 so as to move in the vertical direction. The lifting frame 33 includes a left lifting base 41 and a right lifting base 42. The left lifting base 41 and the right lifting base 42 are moved up and down while always keeping the same height as each other.

As shown in FIG. 3, the left lifting base 41 is mounted so as to move up and down along the left vertical rail 13 provided in the left arm 37. The left lifting base 41 includes left screw coupling parts 43. The left lifting base 41 is screw-coupled to the left screw feeding shaft 14 via the left screw coupling parts 43. Accordingly, in conjunction with rotation of the left screw feeding shaft 14, the left lifting base 41 is moved in the vertical direction.

A left rotation arm supporter 44 is provided on a right side surface of the left lifting base 41. The left rotation arm supporter 44 supports a left rotation arm 61 in the winding unit 6 so as to be rotatable.

As shown in FIG. 2, the right lifting base 42 is mounted so as to move up and down along the right vertical rail 16 provided on the right arm 38. As shown in FIG. 3, the right lifting base 42 includes right screw coupling parts 45. The right lifting base 42 is screw-coupled to the right screw feeding shaft 17 via the right screw coupling parts 45. Accordingly, in conjunction with rotation of the right screw feeding shaft 17, the right lifting base 42 is moved in the vertical direction.

A right rotation arm supporter 46 is provided on a left side surface of the right lifting base 42. The right rotation arm supporter 46 supports a right rotation arm 62 in the winding unit 6 so as to be rotatable.

The left rotation arm supporter 44 and the right rotation arm supporter 46 face each other in the left-right direction. The pitching axis A2 is arranged so as to pass through the right rotation arm supporter 46 and the left rotation arm supporter 44. The pitching axis A2 passes through respective centers of the left rotation arm supporter 44 and the right rotation arm supporter 46, as viewed in the left-right direction.

The right lifting base 42 supports a pitching drive motor 95 and an unit rotation worm 23.

The unit rotation worm 23 is rotatably supported by a shaft arranged coaxially with a rotational shaft of the pitching drive motor 95. The unit rotation worm 23 is driven in rotation by the pitching drive motor 95. Screw teeth for meshing with teeth on an outer peripheral of a unit rotation worm wheel 24, are formed on an outer peripheral surface of the unit rotation worm 23.

The winding unit 6 is configured as a hoop winding unit 6x for hoop winding the fiber bundle F in FIG. 4 with respect to the core material 10. The hoop winding means a winding method in which the fiber bundle F is wound in a direction substantially perpendicular to an axial direction of the core material 10. The winding unit 6 has, as viewed in the front-rear direction, an opening portion (opening) 60, with its center in which the core material 10 passes through. The opening portion 60 is formed so as to penetrate the winding unit 6 in the front-rear direction.

As shown in FIG. 2 to FIG. 4, the hoop winding unit 6x includes a winding unit frame (unit frame) 63, the hoop winding part (winding part) 64, a hoop winding tightening part 65, and a winding drive part 66.

The winding unit frame 63 is made of a plate-like member. The winding unit frame 63 is formed in a U-shape with its front open, as viewed in the vertical direction. The winding unit frame 63 supports a circular rotary table 117 included in the winding drive part 66, so as to be rotated around a winding rotational shaft (tightening rotational shaft) A3 extending in the front-rear direction. The winding unit frame 63 has, as viewed in the front-rear direction, a substantially circular opening 63a. The winding rotational shaft A3 passes through a center of the opening 63a.

The left rotation arm 61 protruding outward is mounted on a left side surface of the winding unit frame 63. The right rotation arm 62 protruding outward is mounted on a right side surface of the winding unit frame 63.

The left rotation arm 61 and the right rotation arm 62 are provided symmetrically in a substantially center part in the vertical direction of the winding unit frame 63. The left rotation arm 61 is rotatably supported by the left rotation arm supporter 44. The right rotation arm 62 is rotatably supported by the right rotation arm supporter 46. That is, the winding unit 6 is supported so as to be rotated around the pitching axis A2 with respect to the lifting frame 33 via the left rotation arm 61 and the right rotation arm 62. Along with a vertical motion of the lifting frame 33, the pitching axis A2 is also moved up and down. A pitching angle θH of the winding unit frame 63 with an upright posture, is 0°. In the following, a positional relationship between components will be described on the basis of a state in which the pitching angle θH of the winding unit frame 63 is 0°.

The unit rotation worm wheel 24 is mounted to the right rotation arm 62 so as not to be rotated relative to each other. In a state in which the winding unit 6 is mounted to the lifting frame 33, the unit rotation worm wheel 24 meshes with the unit rotation worm 23 supported by the right lifting base 42.

The pitching drive motor 95 drives the unit rotation worm 23 in rotation. Since the unit rotation worm 23 to be rotated feeds the teeth of the unit rotation worm wheel 24, the unit rotation worm wheel 24 is rotated. Accordingly, the winding unit 6 faces up and down around the pitching axis A2. The pitching drive motor 95 functions as a posture adjustment motor that adjusts a posture of the hoop winding part 64 in the front-rear direction.

In the filament winding apparatus 100 of this embodiment, the winding unit 6 can face up and down within a range of the angle ±100°. That is, if the pitching angle θH is 0°, the pitching angle θH in a state in which the winding unit frame 63 extends in the vertical direction as viewed in the left-right direction, such pitching angle θH meets a condition of -100° ≤ θH ≤ 100°. Accordingly, even when the core material 10 has a portion substantially parallel to the vertical direction, the winding unit 6 (hoop winding part 64) can be oriented along such portion.

The hoop winding part 64 is provided on a side opposite to the winding drive part 66, across the winding unit frame 63. As shown in FIG. 3, the hoop winding part 64 is arranged on a front surface of the winding unit frame 63. The hoop winding part 64 includes a rotating base 71, a plurality of bobbin supporters 72, a plurality of circumference guiding parts 73, a winding guiding part (fiber bundle guiding part) 74.

As shown in FIG. 3, the rotating base 71 made of two annular plates arranged in the front-rear direction, is mounted to the rotary table 117 so as not to be rotated relative to each other. **In** the following description, one of two annular plates located on a side close to the rotary table 117 may be referred to as a first annular plate 71a, and the other annular plate located on a side far from the rotary table 117 may be referred to as a second annular plate 71b.

The first annular plate 71a and the second annular plate 71b are respectively supported by the rotary table 117. The rotary table 117, the first annular plate 71a and the second annular plate 71b are arranged side by side, in the order from the rear to the front. The rotary table 117, the first annular plate 71a and the second annular plate 71b are parallel to each other. Respective centers of the rotary table 117, the first annular plate 71a and the second annular plate 71b are located on the winding rotational axis A3.

The first annular plate 71a carries the plurality of bobbin supporters 72 (four bobbin supporters 72, in this embodiment). Each bobbin supporter 72 is arranged perpendicular to a front surface of the first annular plate 71a so as to extend in the front-rear direction. The plurality of bobbin supporters 72 is arranged side by side at equal intervals in a circumferential direction of the first annular plate 71a. Accordingly, the winding device 3 of this embodiment can hoop wind the four fiber bundles F simultaneously onto the outer peripheral surface of the core material 10. The number of fiber bundles F may be changed if necessary.

In the following description, in order to identify each of the bobbin supporters 72, one of the bobbin supporters 72 drawn in the upper right portion in FIG. 4 may be referred to as a first bobbin supporter 72a. Other bobbin supporters 72 may be referred to as a second bobbin supporter 72b, a third bobbin supporter 72c, and a fourth bobbin supporter 72d in the clockwise order from the first bobbin supporter 72a in FIG. 4.

The second annular plate 71b carries the plurality of circumference guiding parts 73 (eight circumference guiding parts 73, in this embodiment). As shown in FIG. 3, each circumference guiding part 73 is arranged perpendicular to a front surface of the second annular plate 71b so as to extend in the front-rear direction. The plurality of circumference guiding parts 73 is arranged side by side at equal intervals in a circumferential direction of the second annular plate 71b.

In the following description, in order to identify each of the circumference guiding parts 73, the lower circumference guiding part 73 that is one of the two circumference guiding parts 73 drawn in the rightmost in FIG. 4, may be referred to as a first circumference guiding part 73a. Other circumference guiding parts 73 may be referred to as a second circumference guiding part 73b, a third circumference guiding part 73c, a fourth circumference guiding part 73d, a fifth circumference guiding part 73e, a sixth circumference guiding part 73f, a seventh circumference guiding part 73g, and an eighth circumference guiding part 73h, in the clockwise order from the first circumference guiding part 73a in FIG. 4.

Each of the first circumference guiding part 73a and the second circumference guiding part 73b is configured as one single roller, for example. The first circumference guiding part 73a and the second circumference guiding part 73b guide the fiber bundle F (a thick dotted line in FIG. 4) fed from a bobbin which is supported by the first bobbin supporter 72a.

Each of the third circumference guiding part 73c and the fourth circumference guiding part 73d is configured as a multiple-roller in which two rollers are arranged in the front-rear direction. The third circumference guiding part 73c and the fourth circumference guiding part 73d can guide two fiber bundles F side by side in the front-rear direction without crossing each other. The third circumference guiding part 73c and the fourth circumference guiding part 73d guide the fiber bundles F (a thick dotted line and a thin solid line in FIG. 4) fed from bobbins which are supported by the first bobbin supporter 72a and the second bobbin supporter 72b.

Each of the fifth circumference guiding part 73e and the sixth circumference guiding part 73f is configured as a multiple-roller in which three rollers are arranged in the front-rear direction. The fifth circumference guiding part 73e and the sixth circumference guiding part 73f can guide three fiber bundles F side by side in the front-rear direction without crossing thereamong. The fifth circumference guiding part 73e and the sixth circumference guiding part 73f guide the fiber bundles F (a thick dotted line, a thin solid line and a thin dotted line in FIG. 4) fed from bobbins which are supported by the first bobbin supporter 72a, the second bobbin supporter 72b and the third bobbin supporter 72c.

Each of the seventh circumference guiding part 73g and the eighth circumference guiding part 73h is configured as a multiple-roller in which four rollers are arranged in the front-rear direction. The seventh circumference guiding part 73g and the eighth circumference guiding part 73h can guide four fiber bundles F side by side in the front-rear direction without crossing thereamong. The seventh circumference guiding part 73g and the eighth circumference guiding part 73h guide the fiber bundles F (a thick dotted line, a thin solid line, a thin dotted line and a thin chain line in FIG. 4) fed from bobbins which are supported by the first bobbin supporter 72a, the second bobbin supporter 72b, the third bobbin supporter 72c, and the forth bobbin supporter 72d.

As shown in FIG. 3, the winding guiding part 74 protrudes forward from the rotary table 117. The winding guiding part 74 is supported by the rotary table 117 and the first annular plate 71a. The winding guiding part 74 is provided at a slightly outside part in a radial direction of the rotary table 117 and the first annular plate 71a. The winding guiding part 74 is rotated around the winding rotational axis A3 along with rotation of the rotary table 117 and the first annular plate 71a.

The winding guiding part 74 carries a plurality of (three, in this embodiment) tension bars 74a and a ring guide 74b. Each tension bar 74a applies tension to the corresponding fiber bundle F by rubbing between each tension bar 74a and the corresponding wound fiber bundle F. As shown in FIG. 4, such fiber bundle F is wound around each tension bar 74a in order, and then wound onto the outer peripheral surface of the core material 10 via the ring guide 74b.

As shown in FIG. 4, the fiber bundle F (the thick dotted line in FIG. 4) fed from the bobbin that is supported by the first bobbin supporter 72a is wound around all of the circumference guiding parts 73, in the order of the first circumference guiding part 73a to the eighth circumference guiding part 73h, and then guided to the winding guiding part 74.

The fiber bundle F (the thin solid line in FIG. 4) fed from the bobbin that is supported by the second bobbin supporter 72b is wound around six of the circumference guiding parts 73, in the order of the third circumference guiding part 73c to the eighth circumference guiding part 73h, and then guided to the winding guiding part 74.

The fiber bundle F (the thin dotted line in FIG. 4) fed from the bobbin that is supported by the third bobbin supporter 72c is wound around four of the circumference guiding parts 73, in the order of the fifth circumference guiding part 73e, the sixth circumference guiding part 73f, the seventh circumference guiding part 73g, and the eighth circumference guiding part 73h, and then guided to the winding guiding part 74.

The fiber bundle F (the thin chain line of FIG. 4) fed from the bobbin that is supported by the forth bobbin supporter 72d is wound around two of the circumference guiding parts 73, in the order of the seventh circumference guiding part 73g and the eighth circumference guiding part 73h, and then guided to the winding guiding part 74.

As shown in FIG. 3, the hoop winding tightening part 65 is supported by the rotary table 117 so as to protrude forward of the hoop winding part 64. The hoop winding tightening part 65 and the hoop winding part 64 are arranged side by side in the front-rear direction. The hoop winding tightening part 65 winds a tape T onto the outer peripheral surface of the core material 10 that is hoop-wound by the hoop winding part 64. The tape T may be, for example, a heat-shrinkable tape or a tape impregnated with an uncured thermosetting resin in a liquid state.

The hoop winding tightening part 65 is provided at a position away from the winding rotational axis A3 (slightly outside in the radial direction of the rotary table 117), as viewed in the front-rear direction. The hoop winding tightening part 65 is rotated around the winding rotational axis A3 along with rotation of the rotary table 117. As shown in FIG. 3, the hoop winding tightening part 65 includes a base plate 101, a tightening tape bobbin 102, a first guide roller 103 and a second guide roller 104.

The base plate 101 is made of a plate-like member. The base plate 101 supports the tightening tape bobbin 102, the first guide roller 103 and the second guide roller 104 such that they protrude forward.

The tape T for winding and tightening is wound onto the tightening tape bobbin 102. The tape T drawn from the tightening tape bobbin 102 is wound around the first guide roller 103 and the second guide roller 104 in order, and then the fiber bundle F is wound onto the outer peripheral surface of the hoop-wound core material 10.

As shown in FIG. 2 and the like, the winding drive part 66 includes the winding drive motor 111, a first transmission pulley 112, a transmission belt 113, a second transmission pulley 114, a transmission gear 115, a rotary gear 116, and the rotary table 117.

The winding drive motor 111 is provided upward of and on a left side of the winding unit frame 63. The first transmission pulley 112 is mounted to an output shaft of the winding drive motor 111 so as not to be rotated relative to each other.

The transmission belt 113 is wound around the first transmission pulley 112 and the second transmission pulley 114, and transmits rotation of the first transmission pulley 112 to the second transmission pulley 114. As shown in FIG. 2, a tension roller 118 applying tension to the transmission belt 113 may be provided in the vicinity of an intermediate portion of the transmission belt 113 in the vertical direction.

The second transmission pulley 114 and the transmission gear 115 are rotatably supported by the winding unit frame 63 on a lower left side of the winding unit frame 63. The second transmission pulley 114 and the transmission gear 115 arranged side by side in the front-rear direction are provided so as not to be rotated relative to each other.

The rotary gear 116 is provided at a center of the winding unit frame 63, as viewed in the front-rear direction. That is, a center of the rotary gear 116 is positioned on the winding rotational axis A3. The rotary gear 116 meshes with the transmission gear 115. The rotary gear 116 having an annular shape is supported by the rotary table 117 so as not to be rotated relative to each other.

The rotary table 117 made of an annular plate is arranged coaxially with the rotary gear 116. The rotary table 117 is arranged forward of the rotary gear 116. The rotary table 117 is rotatably supported by the winding unit frame 63.

A driving force of the winding drive motor 111 is transmitted to the rotary gear 116 and the rotary table 117 via the first transmission pulley 112, the transmission belt 113, the second transmission pulley 114, and the transmission gear 115. Rotation of the rotating table 117 allows the hoop winding part 64 and the hoop winding tightening part 65 which are supported by the rotary table 117 to be rotated around the winding rotational axis A3.

Accordingly, the fiber bundle F guided by the winding guiding part 74 and the tape T guided by the second guide roller 104 are wound onto the outer peripheral surface of the core material 10. The hoop winding tightening part 65 is provided at a position displaced from the hoop winding part 64 in the front-rear direction. Therefore, after the fiber bundle F is wound around the core material 10, the tape T is then wound onto the outer peripheral surface of the core material 10.

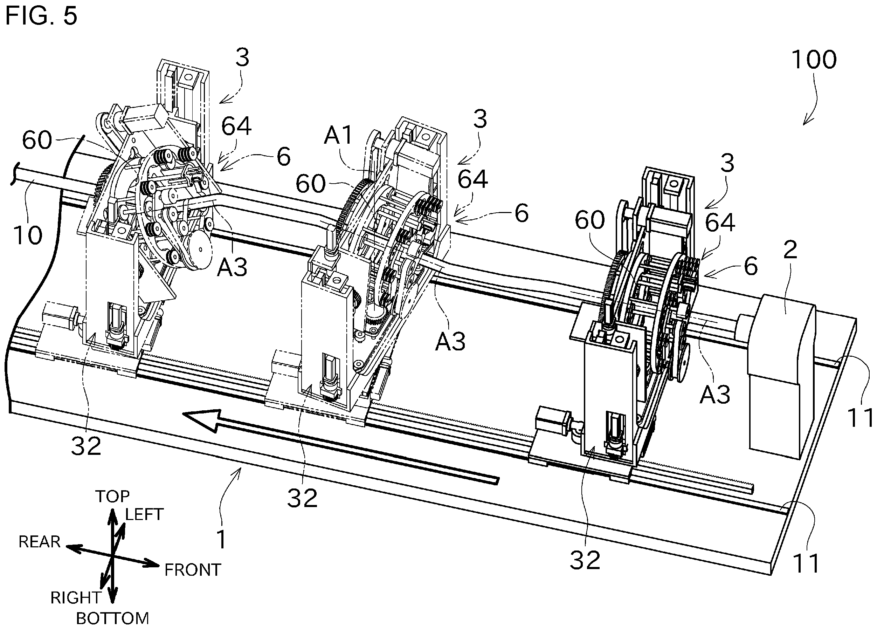

In this embodiment, the winding device 3 travels along the core material 10 such that the hoop winding part 64 precedes the hoop winding tightening part 65 in a traveling direction of the winding device 3. Accordingly, with one traveling of the winding device 3, the fiber bundle F and the tape T can be wound onto the outer peripheral surface of the core material 10. FIG. 5 shows an example in which the fiber bundle F and the tape T are wound onto the outer peripheral surface of the core material 10 with one traveling of the winding device 3 rearward. However, in a first traveling, the fiber bundle F may be firstly wound onto the outer peripheral surface of the core material 10 by means of the hoop winding part 64. In a second traveling, the tape T may be then wound onto the outer peripheral surface in which the fiber bundle F has already been wound in the first traveling, by means of the hoop winding tightening part 65. The traveling direction of the winding device 3 may be reversed between the first traveling and the second traveling.

The drive motors (specifically, the front-rear traveling drive motor 91, the left-right traveling drive motor 92, the rotary drive motor 93, the lifting motor 94, and the pitching drive motor 95) included in the winding device 3 are controlled by the control section 5 in FIG.1. For such control, for example, as shown in FIG. 1, a position of the winding unit 6 can be described to define an XYZ rectangular coordinate system with an X-axis that is a left-right axis, a Y-axis that is an up-down axis, and a Z-axis that is a front-rear axis.

Accordingly, as shown in FIG. 5, the winding device 3 travels along the rails 11 while adjusting the position and the posture of the winding unit 6 such that the center of the opening 60 in the winding unit 6 always coincides with the center of the core material 10. That is, the winding rotational shaft A3 of the hoop winding part 64 always coincides with the axial direction of the core material 10. Accordingly, even in the core material 10 having a curved shape, the fiber bundle F can be wound onto the outer peripheral surface of the core material 10 according to its shape.

In this embodiment, the fiber bundle F can be wound around the core material 10 which is originally curved, according to such curved shape. Therefore, it is superior in that winding of the fiber bundle F is not disordered, as compared with a configuration in which a linear core material around which the fiber bundle has already been wound is curved.

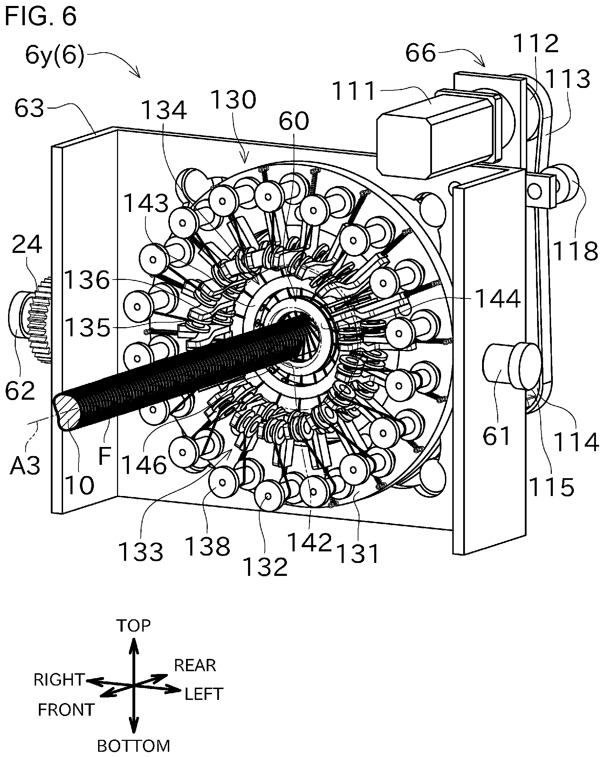

The winding unit 6 may be configured as a helical winding unit 6y for helical winding shown in FIG. 6. The helical winding means a winding method for winding the fiber bundle F in a direction tilted by a predetermined angle from the axial direction of the core material 10.

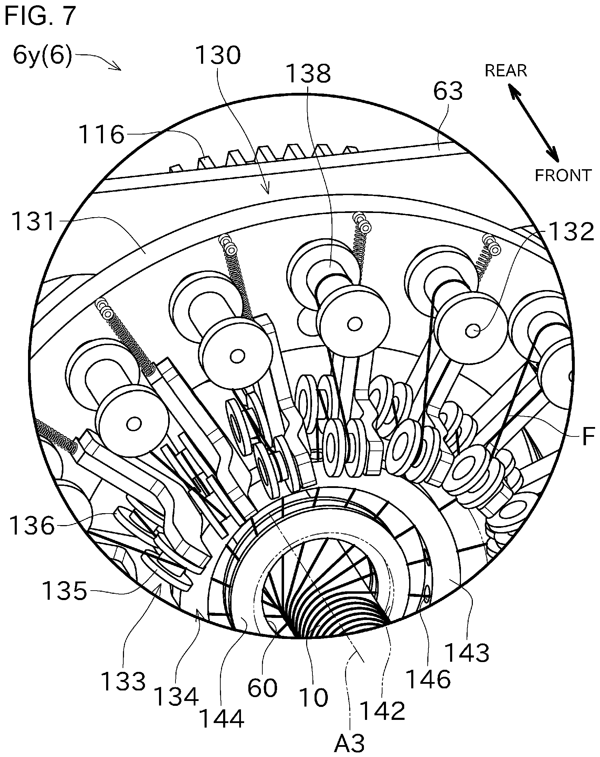

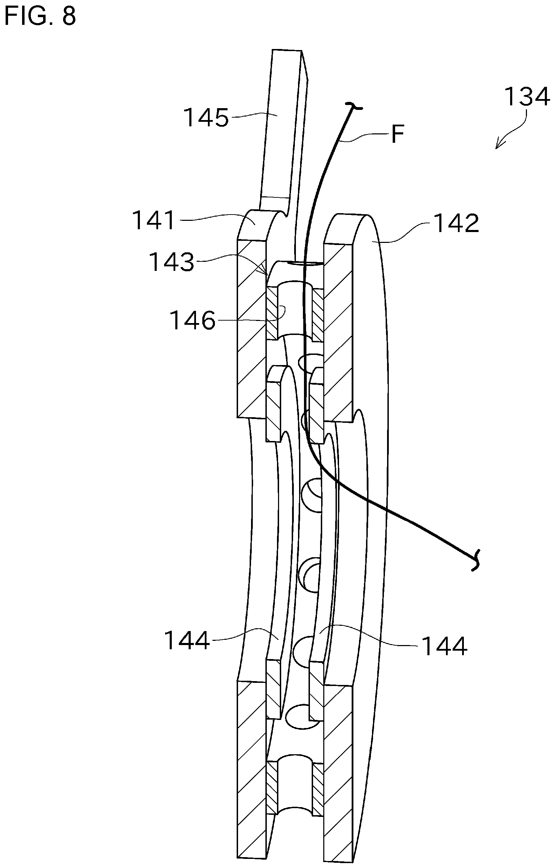

FIG. 6 is a perspective view showing a configuration of the helical winding unit 6y. FIG. 7 is a partial enlarged view showing a configuration of the helical winding unit 6y. FIG. 8 is a cross-sectional perspective view showing a configuration of a central guiding part 134 of the helical winding unit 6y. In the following description of the helical winding unit 6y, members identical or similar to those of the above-described embodiment may not be described and instead the same reference signs as in the above-described embodiment are given on the drawings.

As shown in FIG. 6, the helical winding unit 6y includes a helical winding part (winding part) 130 instead of the hoop winding part 64 and the hoop winding tightening part 65. The helical winding part 130 includes a base circular plate 131, a plurality of bobbin mounting parts 132, a plurality of helical winding circumference guiding parts 133, and a central guiding part 134. The helical winding circumference guiding parts 133 and the central guiding part 134 form a fiber bundle guide section for guiding the plural fiber bundles F simultaneously.

The base circular plate 131 having an annular shape, its center position coincides with the center of the opening 60 in the helical winding unit 6y. The base circular plate 131 is provided on a side opposite to the winding drive part 66 in the front-rear direction, across the winding unit frame 63. The base circular plate 131 that is mounted to the rotary table 117 in the winding drive part 66, is rotated in conjunction with rotation of the rotary table 117.

The bobbin mounting parts 132 are provided perpendicular to a front surface of the base circular plate 131 so as to protrude forward from the base circular plate 131. A plurality of bobbins 138 around which the fiber bundle F is wound is mounted to the corresponding bobbin mounting part 132.

The plurality of bobbin mounting parts 132 is arranged side by side at equal intervals in a circumferential direction of the base circular plate 131. Each helical winding circumference guiding part 133 is provided in the vicinity of the corresponding bobbin mounting part 132. Each helical winding circumference guiding part 133 is arranged side by side at equal intervals in the circumferential direction of the base circular plate 131.

Each helical winding circumference guiding part 133 includes one by one, first intermediate rollers 135 and second intermediate rollers 136 arranged in the front-rear direction. As shown in FIG. 7, each first intermediate roller 135 is provided at a position farther from the base circular plate 131 than the corresponding second intermediate roller 136. In other words, each first intermediate roller 135 is provided forward of the corresponding second intermediate roller 136.

Each second intermediate roller 136 is mounted to the base circular plate 131 so as to slide in a radial direction. Each second intermediate roller 136 is biased in an orientation of moving outward in the radial direction of the base circular plate 131, by means of an appropriate biasing member (specifically, a spring).

As shown in FIG. 6 and FIG. 7, the fiber bundle F from each bobbin 138 that is mounted to each bobbin mounting part 132 is wound around the corresponding first intermediate roller 135 and the corresponding second intermediate roller 136 in order, and then guided to the central guiding part 134. The tension applied to the fiber bundle F is appropriately adjusted by spring force in which the biasing member exerts on each second intermediate roller 136. As such, each second intermediate roller 136 functions as a tension roller.

The central guiding part 134 having a substantially cylindrical shape, is provided at the center of the helical winding section 130 such that an axial direction of the central guiding part 134 coincides with the winding rotational shaft A3. An annular guiding part 143 is formed smaller than an annular area where each first intermediate roller 135 and each second intermediate roller 136 are arranged side by side.

In other words, the annular guiding part 143 is provided at a position closer to a center than each first intermediate roller 135 and each second intermediate roller 136, as viewed in the front-rear direction. The fiber bundle F guided by each second intermediate roller 136 is guided from an outside in the radial direction of the central guiding part 134 to the core material 10 passing through an inside of the central guiding part 134, as shown in FIG. 6 and FIG. 7.

As shown in FIG. 8, the central guiding part 134 includes a first annular plate 141, a second annular plate 142, an annular guiding part 143, and auxiliary guiding parts 144. All of the first annular plate 141, the second annular plate 142, the annular guiding part 143, and the auxiliary guiding parts 144 are respectively formed in an annular shape and arranged such that their central axes coincide.

The first annular plate 141 has a mounting part 145 extending in a radial direction. Although the base circular plate 131 is not shown in FIG. 8, the first annular plate 141 is mounted to the base circular plate 131 via the mounting part 145. Accordingly, the first annular plate 141 is rotated in conjunction with rotation of the base circular plate 131. The first annular plate 141 is connected to the annular guiding part 143 on one side in the front-rear direction.

The second annular plate 142 has an annular shape like the first annular plate 141. The second annular plate 142 is connected to the annular guiding part 143 on a side opposite to the first annular plate 141 in the front-rear direction.

The annular guiding part 143 having an annular shape, has a predetermined thickness in an axial direction. An outer diameter of the annular guiding part 143 is smaller than that of the first annular plate 141 and the second annular plate 142. An inner diameter of the annular guiding part 143 is larger than that of the first annular plate 141 and the second annular plate 142.

The annular guiding part 143 has fiber bundle guide holes 146 that penetrate the annular guiding part 143 in the radial direction. The plurality of fiber bundle guide holes 146 is formed side by side at equal intervals in a circumferential direction of the annular guiding part 143, in accordance with the number of bobbin mounting parts 132 (in other words, the number of helical winding circumference guiding parts 133). Each fiber bundle guide hole 146 guides the fiber bundle F guided from the corresponding second intermediate roller 136 to the center side of the central guiding part 134.

Each of the auxiliary guiding parts 144 is made of two plates having an annular shape. As shown in FIG. 8, an outer diameter of each auxiliary guiding part 144 is larger than an inner diameter of the first annular plate 141 and the second annular plate 142, and smaller than an inner diameter of the annular guiding part 143. The inner diameter of each auxiliary guiding part 144 is smaller than that of the first annular plate 141 and the second annular plate 142.

The two plates forming each auxiliary guiding part 144 are respectively connected to a front surface of the first annular plate 141 and a rear surface of the second annular plate 142. The auxiliary guiding parts 144 are provided coaxially with the first annular plate 141 and the second annular plate 142.

With this configuration, as shown in FIG. 8, an inner peripheral surface of each auxiliary guiding part 144 is closer to a shaft of the central guiding part 134 than the inner peripheral surface of the first annular plate 141 and the second annular plate 142. That is, the fiber bundle F guided by each auxiliary guiding part 144 can be guided to a position closer to the core material 10 passing through the center of the central guiding part 134, via the auxiliary guiding parts 144. This can further stabilize behaviors of the fiber bundle F to be wound around the core material 10.

The helical winding section 130 with the above-described configuration can guide the plurality of fiber bundles F radially to the core material 10. The helical winding section 130 is rotated along with rotation of the rotary table 117, and thereby the plurality of fiber bundles F can be simultaneously wound around the core material 10.

Next, creation of a winding data as a control data for which the control section 5 controls each of the motors, will be described. In the following description, in accordance with the above-described XYZ coordinate system, the left-right direction may be referred to as an X direction, the vertical direction may be referred to as a Y direction, and the front-rear direction may be referred to a Z direction. In the following, a case where the hoop winding unit 6x is used as the winding unit 6 will be described.

In the filament winding apparatus 100 of this embodiment, the controller 50 included in the control section 5 controls operations of each drive motor in accordance with pre-prepared winding data. Accordingly, the controller 50 controls such that the base frame 31 in the winding device 3 travels along the rails 11 while adjusting the position and the posture of the hoop winding part 64 in accordance with a shape (curvature) of the core material 10. In conjunction with such motion, the hoop winding part 64 is rotated, and thereby the fiber bundle F is wound onto the outer peripheral surface of the core material 10.

The controller 50 creates the winding data. Various information is required to create the winding data. The various information includes an initial setting value for winding the fiber bundle F and a winding position posture information for which the position and the posture of the winding device 3 are changed along the core material 10 having a curved shape.

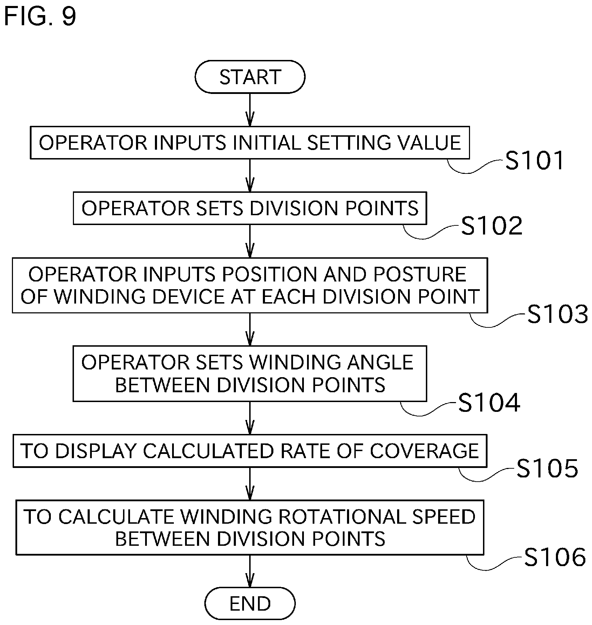

The initial setting value includes, for example, a length L in the Z direction of the core material 10 around which the fiber bundle F is wound, the number N of the fiber bundles F to be hoop-wound, a width W of the fiber bundle F, a diameter D of the core material 10, and the like. The operator inputs the above-described initial setting value to the controller 50 via the operation part 52 included in the control section 5 (a step S101 in FIG. 9, an initial setting value input step).

Next, the operator inputs the winding position posture information. Since the core material 10 is curved, the position and the posture of the winding device 3 suitable for winding the fiber bundle F around the core material 10 is varied depending on a position where the fiber bundle F is wound around the core material 10. The above-described information regarding the position and the posture is gathered into the winding position posture information. Although the core material 10 with various shapes can be replaced and mounted to the core material support devices 2, the winding position posture information is varied depending on the shape of the core material 10.

The winding position posture information includes an X coordinate value Xn, a Y coordinate value Yn, a Z coordinate value Zn, a rotation angle θVn, and a pitching angle θHn, which are determined for each point where the hoop winding part 64 passes during winding.

The X coordinate value Xn, the Y coordinate value Yn, and the Z coordinate value Zn represent a position of the hoop winding part 64 in the XYZ rectangular coordinate system. Therefore, combination of the X coordinate value Xn, the Y coordinate value Yn, and the Z coordinate value Zn is a position information identifying the position of the hoop winding part 64. An original point of the XYZ rectangular coordinate system can be set at any position.

The rotation angle θVn and the pitching angle θHn represent a posture of the hoop winding part 64 (in other words, the orientation of the winding rotational axis A3). Therefore, combination of the rotation angle θVn and pitching angle θHn is a posture information identifying the posture of the hoop winding part 64.

The plurality of points of the winding position posture information is determined so as to include a range where the fiber bundle F is wound around the core material 10. As shown in FIG. 9, the operator sets division points (points) P1, P2, ... such that the length L in the Z direction of the core material 10 is divided into several parts at equal intervals (a step S102 in FIG. 9, a point setting step). The number of divided parts is appropriately determined depending on the length of the core material 10 and an accuracy required for winding. For example, it is conceivable that the length L in the Z direction of the core material 10 is divided into 128 parts, for example. Accordingly, the core material 10 is virtually divided into several parts in the Z direction.

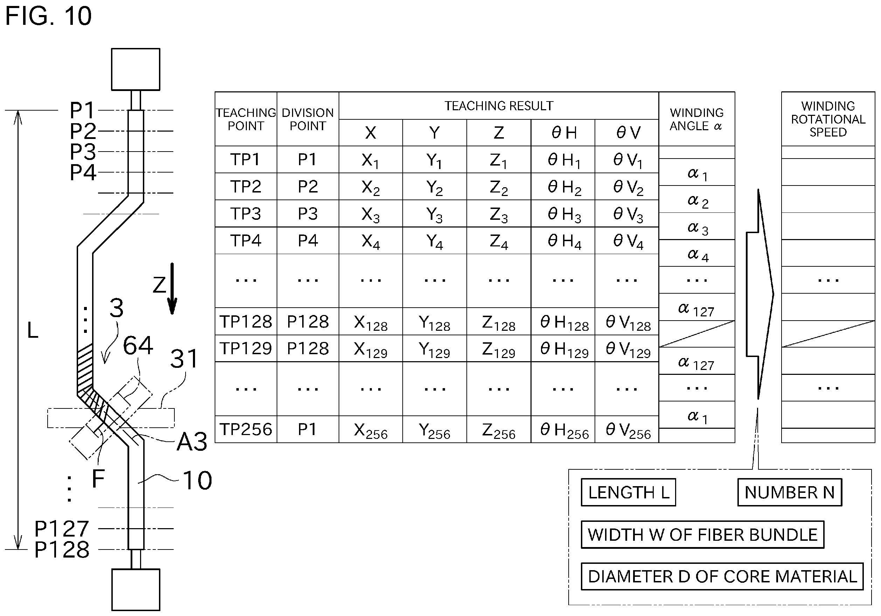

The operator specifies the number of division points via the operation part 52, for example. Accordingly, a target division point Pn (provided that n is an integer greater than or equal to 1) is automatically generated. The controller 50 automatically calculates the Z coordinate value Zn of the target division point Pn in the winding position information shown in FIG. 10, based on the length L in the Z direction of the core material 10 and the number of division points.

Next, the operator uses the operation part 52 included in the control section 5 to conduct teaching, for the target division point Pn, for the position and the posture of the winding unit 6 suitable for winding the fiber bundle F around the target division point Pn. Teaching is performed for a case where the winding device 3 performs winding while traveling forward and a case where the winding device 3 performs winding while traveling rearward, respectively. The operator conducts teaching at each division point Pn on an outward route and teaching at each division point Pn on a return route, while causing the winding device 3 to be reciprocated in the Z direction along the rails 11. Therefore, when the number of division points Pn is 128, the number of teaching points TPn is 256.

In a state in which the core material 10 is actually set in the core material support devices 2, the operator uses the control section 5 to cause the winding device 3 to be moved to the target teaching point TPn, and then teach the position and the posture of the winding device 3 at the target teaching point TPn. Accordingly, the position posture information including the position information and the posture information is inputted to the controller 50 (a step S103 in FIG. 9, a posture information input step).

At one of the teaching points TPn, for example, the operator operates to adjust the position and the posture of the hoop winding part 64 by manually moving each of the left-right traveling drive motor 92, the rotary drive motor 93, the lifting motor 94, and the pitching drive motor 95, such that the core material 10 passes through the center of rotation of the hoop winding part 64 (that is, such that the winding rotational axis A3 of the hoop winding part 64 coincides with the shaft of the core material 10).

The operator conducts a predetermined teaching operation with respect to the operation part 52, after adjusting the position and the posture of the hoop winding part 64 such that the winding rotational axis A3 coincides with the shaft of the core material 10. The controller 50 obtains the X coordinate value Xn, the Y coordinate value Yn, the Z coordinate value Zn, the pitching angle θHn, and the rotation angle θVn at a time of performing the teaching operation. These values may be obtained by a detection result of a sensor (not shown) mounted to the winding device 3, or may be obtained by calculation of a control value with respect to each drive motor. The controller 50 confirms that the obtained Z coordinate value Zn has the substantially same value as the Z coordinate value at the corresponding teaching point. After that, the controller 50 stores the X coordinate value Xn, the Y coordinate value Yn, the Z coordinate value Zn, the pitching angle θHn, and the rotation angle θVn.

The operator completes to perform teaching for one of the teaching points TPn, and then operates to perform teaching for the subsequent teaching point TPn. The operator operates the operation part 52 to move the drive motors in the winding device 3, and to perform teaching operations for each of the 256 teaching points.

In the posture information input step, as describe above, the operator operates to actually move the winding device 3 such that the winding device 3 matches with each of the divided parts in the core material 10, and thereby the position posture information at the target teaching point TPn is inputted. This can perform teaching according to the actual core material 10. However, alternatively, the position posture information of the winding device 3 at the target teaching point TPn may be calculated and stored by using data indicating the shape of the core material 10, for example. Such data can be, for example, a three-dimensional model data indicating the shape of the core material 10. Alternatively, data indicating an outline of the centerline of the core material 10 in a three-dimensional space, may be acceptable.

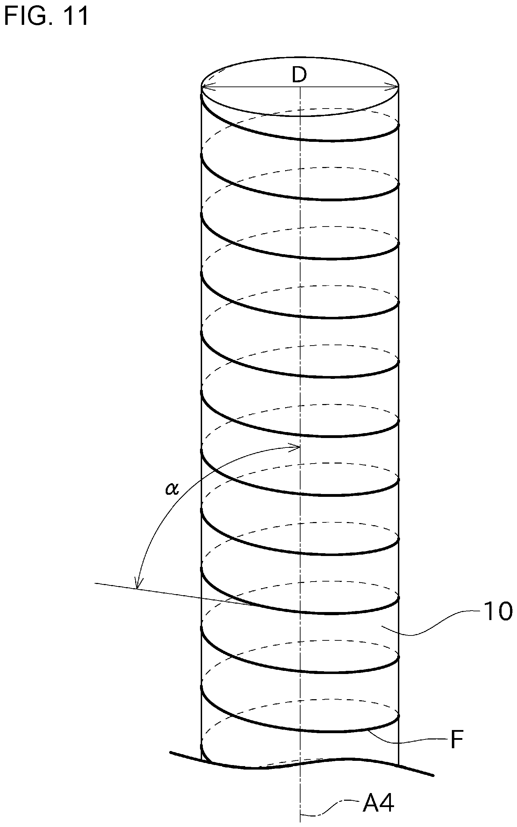

Next, the operator uses the operation part 52 to set a winding angle αn of the fiber bundle F between two division points Pn and Pn+1 adjacent to each other in the Z direction (a step S104 in FIG. 9, a winding angle setting step). As shown in FIG. 11, the winding angle α is an angle defined by a tangential direction of the fiber bundle F wound onto the outer peripheral surface of the core material 10 and a direction where an axis A4 of the core material 10 extends.

In the winding angle setting step, the operator can operate to partially change the winding angle αn with respect to the core material 10 in accordance with product specifications, etc. The winding angle αn can be specified for each range between the division points Pn and Pn+1 adjacent to each other. The operator can specify to wind with, for example, a large winding angle α in a range from a first division point P1 to a 32nd division point P32, and a small winding angle α in a range from the 32nd division point P32 to an 128th division point P128. This can obtain products with partial different strength, without special operations such as partial double winding.

Next, the controller 50 calculates a rate of coverage based on the specified winding angle αn and displays such rate of coverage on the display 51 (a step S105, a coverage rate displaying step).

The rate of coverage is, when the fiber bundle F is wound onto the outer peripheral surface of the core material 10, a ratio of an area where the fiber bundle F covers the outer peripheral surface of the core material 10 to an area of the outer peripheral surface of the core material 10. If the rate of coverage is less than 1, the fiber bundle F is wound around the core material 10 while forming a gap between the fiber bundle F and an adjacent fiber bundle F to be wound. If the rate of coverage is greater than 1, the fiber bundle F is wound around the core material 10 so as to partially overlap the adjacent fiber bundle F to be wound. The rate of coverage can be obtained by geometrical calculation using the winding angle αn and the width W of the fiber bundle, etc. The operator determines whether or not to change the set winding angle αn with reference to the rate of coverage to be displayed.

The operator conducts a predetermined confirmation operation for the operation part 52 if there is no problem with the rate of coverage to be displayed.

Next, the controller 50 calculates a winding rotational speed of the winding drive motor 111 between the two division points Pn and Pn+1 adjacent to each other (a step S106 in FIG. 9, a winding rotational speed calculation step), based on the inputted initial setting value, the position posture information, and the winding angle αn. Specifically, the winding rotational speed is calculated based on the posture information and the position information of the two teaching points TPn and TPn+1, and the winding angle αn between the corresponding division points Pn and Pn+1. The controller 50 generates winding data including a rotational speed of each drive motor for changing the position and the posture of the hoop winding part 64 at an appropriate speed according to the above-described position posture information, and the target winding rotational speed of the winding drive motor 111 for achieving the winding angle αn.

Accordingly, regardless of a traveling speed of the front-rear traveling drive motor 91, the winding angle α of the fiber bundle F can be kept at the winding angle αn that is set by the operator, between the teaching points TPn. That is, the controller 50 can appropriately control the rotational speed of the winding drive motor 111 in accordance with the traveling speed of the winding device 3 in the Z direction, based on the calculated winding rotational speed.

As described above, the filament winding apparatus 100 of this embodiment includes the rail 11, the hoop winding part 64, the winding drive motor 111, and the control section 5. The rail 11 extends in the Z direction. The winding device 3 winds the fiber bundle F onto the outer peripheral surface of the core material 10. The winding drive motor 111 drives the hoop winding part 64 in rotation around the winding rotational axis A3 along the axial direction of the core material 10. The control section 5 controls the winding drive motor 111. The winding data of the filament winding apparatus 100 is created by using the following method. A winding data creation method includes the initial setting value input step, the point setting step, the winding angle setting step, and the winding rotational speed calculation step. The initial setting value input step is to input an initial setting value including the length L in the Z direction of the core material 10 in the Z direction. The point setting step is to set the plurality of division points P1, P2, ... such that the length L in the Z direction of the core material 10 is divided into several parts. The winding angle setting step is to set the winding angle αn that is an angle defined by the axial direction of the core material 10, and the fiber bundle F between the two adjacent division points Pn and Pn+1. The winding rotational speed calculation step is to calculate, at least based on the initial setting value to be inputted and the winding angle αn to be set, the winding rotational speed of the winding drive motor 111 between the adjacent two division points Pn and Pn+1, respectively.

Accordingly, the winding angle α with respect to the core material 10 can be partially changed, which can finish products with partially different strength in the longitudinal direction of the core material 10, with just one series of winding work.

The filament winding apparatus 100 of this embodiment includes the rotary drive motor 93 and the pitching drive motor 95. The rotary drive motor 93 and the pitching drive motor 95 adjust the posture of the hoop winding part 64 in the Z direction. The winding data creation method includes the posture information input step. The posture information input step is to input the posture information (θVn, θHn) of the hoop winding part 64 at each of the division points P1, P2, ... that is set in the point setting step. In the winding rotational speed calculation step, the winding rotational speed of the winding drive motor 111 is calculated based on the initial setting value, the winding angle αn, and the posture information inputted in the posture information input step.

Accordingly, the fiber bundle F can be wound around even the core material 10 having a curved shape, with the specified winding angle αn.

In this embodiment, in the posture information input step, teaching is performed in a state of adjusting the posture of the winding device 3 such that the winding rotational axis A3 of the hoop winding part 64 coincides with the axis of the core material 10, at each of the division points P1, P2, ... that is set in the point setting step, to input the posture information (θVn, θHn).

Accordingly, the posture information confirming the actual shape of core material 10 can be obtained.

However, in the posture information input step, based on a pre-inputted 3D data of the core material 10, the posture of the hoop winding part 64 at each of the division points P1, P2, ... that is set in the point setting step can be also obtained as the posture information (θVn, θHn) by calculation.

In this case, the posture information can be easily obtained without actually moving the hoop winding part 64. Therefore, a pre-setting work is simplified even when there are many division points P1, P2, ....

In this embodiment, the posture information input step is to input the posture information (θVn, θHn) at each of the division points P1, P2, ..., in a case where the hoop winding part 64 is moved to one side in the Z direction relative to the core material 10 and a case where the hoop winding part 64 is moved to the other side in the Z direction relative to the core material 10.

Accordingly, even when the posture of the hoop winding part 64 suitable for winding of the fiber bundle F is varied depending on an orientation in which the hoop winding part 64 is relatively moved in the Z direction, winding of the fiber bundle F with various postures can be accepted by inputting the posture information for the orientation of relative movement.

In this embodiment, each of the division points P1,P2, ... can be set at equal intervals in the Z direction.

Accordingly, the division points P1,P2, ... can be easily set.

In this embodiment, the initial setting value inputted in the initial setting value input step further includes the number N of fiber bundles F, the width W of the fiber bundle F, the diameter D of the core material 10.

This can more appropriately calculate the winding rotational speed of the winding drive motor 111 in accordance with winding conditions, respectively.

In this embodiment, the winding data creation method includes a displaying step. The displaying step is to display the rate of coverage of the fiber bundle F wound onto the outer peripheral surface of the core material 10, the rate of coverage calculated based on the winding angle αn to be set.

Accordingly, the operator can easily confirm the rate of coverage of the fiber bundle F wound in accordance with the winding data.

Although a preferred embodiment of the present invention has been described above, the above-described configuration can be modified, for example, as follows.

Instead of the winding angle α, the winding rotational speed of the fiber bundle F per unit length may be inputted. This input is substantially the same as an input of the winding angle α.

The operator may input a desired rate of coverage into the operation part 52, to allow the controller 50 to calculate the winding angle α from the inputted rate of coverage. The operator may then input the displayed winding angle α as it is. Such input support function can improve convenience.

Similarly, the winding data can be also created when the helical winding unit 6y is used as the winding unit 6. In this case, the helical winding section 130 corresponds to a winding part that is rotated around the winding rotational axis A3.

The division points P1, P2, ... may be set at unequal intervals in the Z direction. For example, it is conceivable to set the division points sparsely at a portion where the core material 10 extends straight, and to set the division points densely at a curved portion in the core material 10. Accordingly, the position and the posture of the winding device 3 are particularly finely adjusted for the curved portions in the core material 10 while avoiding an increase of the division points. This can cleanly wind the fiber bundle F.

In the above-described embodiment, a function of the drive control section for controlling various drive motors (including the winding drive motor 111) and a function of the data creation section for creating the winding data are realized by the one single controller 50. However, the drive control section and the data creation section may be realized by separate hardware. The information of the rate of coverage may be displayed on a display of a computer that creates the winding data, or may be displayed on a display of a computer provided in the filament winding apparatus 100.

Instead of the winding device 3 moving in the front-rear direction, the core material support devices 2 supporting the core material 10 may be moved in the front-rear direction. Accordingly, the winding device 3 is moved relative to the core material 10 in the Z direction, which can realize the substantially same motion as the above-described embodiment. Both of the winding device 3 and the core material support devices 2 may be moved in the front-rear direction.

The lifting frame 33 may be omitted, and then the winding unit 6 may be mounted so as not to be rotated relative to the main frame 32. In this case, the winding unit 6 cannot be moved up and down and cannot face up and down. However, if the core material 10 is two-dimensionally curved, the fiber bundle F can be wound around the core material 10 without any problem. In this configuration, the position information is only the X coordinate value Xn and the Z coordinate value Zn, and the posture information is only the rotation angle θVn.

The main frame 32 may be configured so as not to be moved left and right and not to be rotated around the rotational axis A1. In this case, the fiber bundle F is wound around the core material 10 only with vertical motion and pitching motion of the winding unit 6. Also in this configuration, the fiber bundle F can be wound around the core material 10 if the core material 10 is two-dimensionally curved. In this configuration, the position information is only the Y coordinate value Yn and the Z coordinate value Zn, and the posture information is only the pitching angle θHn.

In the above-described embodiment, in order to three-dimensionally change the posture of the winding unit 6 (the hoop winding part 64 or the helical winding section 130), a mechanism that realizes left-right motion and rotation around the rotational axis A1 is provided in the base frame 31. Such mechanism further includes a mechanism that realizes vertical motion and rotation around the pitching axis A2. However, the mechanism that realizes vertical motion and rotation around the pitching axis A2 may be provided in the base frame 31. Such mechanism may further include the mechanism that realizes left-right motion and rotation around the rotational axis A1.

The orientation of each axis in the coordinate system is not limited to the above-described orientation, and can be set arbitrarily.

### DESCRIPTION OF THE REFERENCE NUMERALS

- 5: control section
- 10: core material
- 11: rail
- 64: hoop winding part (winding part)
- 100: filament winding apparatus
- 111: winding drive motor
- A3: winding rotational axis
- F: fiber bundle

## Claims

1. A winding data creation method for a filament winding apparatus (100), the filament winding apparatus (100) including a rail (11) extending in a first direction, a winding part (64) that winds a fiber bundle (F) onto an outer peripheral surface of a core material (10), a winding drive motor (111) that drives the winding part (64) in rotation around a winding rotational axis (A3) along an axial direction of the core material (10), and a control section (5) that controls the winding drive motor (111), the winding data creation method being **characterized by**
an initial setting value input step (S101) of inputting an initial setting value including a length (L) in the first direction (Z) of the core material (10) in the first direction (Z);
a point setting step (S102) of setting a plurality of points (P1, P2,...) so as to divide the length of the core material (10) in the first direction (Z);
a winding angle setting step (S104) of setting a target winding angle that is an angle defined by an axial direction of the core material (10), and the fiber bundle (F) wound around the core material (10) between two of the plurality of points (P1, P2,...) adjacent to each other in the first direction (Z); and
a winding rotational speed calculation step (S106) of calculating, at least based on the initial setting value to be inputted and the target winding angle to be set, a target winding rotational speed of the winding drive motor (111) between the two points adjacent to each other, respectively.

2. The winding data creation method according to claim 1, wherein
the filament winding apparatus (100) includes a posture adjustment motor (93, 95) that adjusts a target posture of the winding part (64) in the first direction (Z),
the winding data creation method includes a posture information input step (103) of inputting a target posture information of the winding part (64) at each of the points (P1, P2,...) that is set in the point setting step (S102),
in the winding rotational speed calculation step (S106), the winding rotational speed of the winding drive motor (111) is calculated based on the initial setting value, the target winding angle, and the target posture information inputted in the posture information input step (103).

3. The winding data creation method according to claim 2, wherein
in the posture information input step (103), an operator conducts teaching in a state of adjusting a posture of the winding part (64) such that the winding rotational axis (A3) of the winding part (64) coincides with an axis of the core material (10), at each of the plurality of points (P1, P2,...) that is set in the point setting step (S102), to input the target posture information.

4. The winding data creation method according to claim 2, wherein
in the posture information input step (S103), based on a pre-inputted 3D data of the core material (10), the posture of the winding part (64) at each of the plurality of points (P1, P2,...) that is set in the point setting step (S102) is calculated as the target posture information.

5. The winding data creation method according to any one of claims 2 to 4, wherein
in the posture information input step (S103), the target posture information at each of the plurality of points (P1, P2,...) is inputted in a case where the winding part (64) is moved to one side in the first direction (Z) relative to the core material (10) and a case where the winding part (64) is moved to the other side in the first direction (Z) relative to the core material (10).

6. The winding data creation method according to any one of claims 1 to 5, wherein
each of the plurality of points (P1, P2,...) is set at equal intervals in the first direction (Z).

7. The winding data creation method according to any one of claims 1 to 6, wherein
the initial setting value inputted in the initial setting value input step (S101) further includes:
a number of fiber bundles (F);
a width of the fiber bundle (F); and
a diameter of the core material (10).

8. The winding data creation method according to any one of claims 1 to 7, wherein
the method includes a displaying step (S105) of displaying a rate of coverage of the fiber bundle (F) on an outer peripheral surface of the core material (10), the rate of coverage calculated based on the winding angle to be set.

9. A filament winding apparatus (100) comprising:
a rail (11) extending in a first direction (Z);
a winding part (64) that is provided to wind a fiber bundle (F) onto an outer peripheral surface of a core material (10);
a winding drive motor (111) that is provided to drive the winding part (64) in rotation around a winding rotational axis along an axial direction of the core material (10);
a drive control section (5) that is adapted to control the winding drive motor (111); and
a data creation section that is adapted to create data for controlling the winding drive motor (111), **characterized in that**
an initial setting value, a plurality of points (P1, P2,...), and a target winding angle can be set in the data creation section, the initial setting value including a length (L) in the first direction (Z) of the core material (10) in the first direction (Z), the plurality of points (P1, P2,...) that divides the length (L) of the core material (10) in the first direction (Z), the target winding angle is an angle defined by an axial direction of the core material (10), and the fiber bundle (F) between two of the plurality of points (P1, P2,...) adjacent to each other in the first direction (Z),
the data creation section is adapted to calculate, at least based on the initial setting value to be inputted and the target winding angle to be set, a target winding rotational speed of the winding drive motor (111) between the two points adj acent to each other, respectively.

## Patentansprüche

1. Wickeldatenerzeugungsverfahren für eine Filamentwickelvorrichtung (100), wobei die Filamentwickelvorrichtung (100) eine Schiene (11), welche sich in einer ersten Richtung erstreckt, einen Wickelteil (64), welcher ein Faserbündel (F) auf eine äußere Umfangsfläche eines Kernmaterials (10) wickelt, einen Wickelantriebsmotor (111), welcher den Wickelteil (64) um eine Wickeldrehachse (A3) entlang einer axialen Richtung des Kernmaterials (10) in Drehung versetzt, und einen Steuerabschnitt (5) umfasst, welcher den Wickelantriebsmotor (111) steuert, wobei das Wickeldatenerzeugungsverfahren **gekennzeichnet ist, durch**:
einen Initialeinstellwerteingabeschritt (S101) eines Eingebens eines Initialeinstellwerts, welcher eine Länge (L) in der ersten Richtung (Z) des Kernmaterials (10) in der ersten Richtung (Z) umfasst;
einen Punkteinstellschritt (S102) eines Einstellens einer Mehrzahl von Punkten (P1, P2, ...), um die Länge des Kernmaterials (10) in der ersten Richtung (Z) zu teilen;
einen Wickelwinkeleinstellschritt (S104) eines Einstellens eines Zielwickelwinkels, welcher ein Winkel ist, der **durch** eine axiale Richtung des Kernmaterials (10) und des um das Kernmaterial (10) gewickelte Faserbündels (F) zwischen zwei der Mehrzahl von Punkten (P1, P2, ...) definiert ist, welche in der ersten Richtung (Z) einander benachbart sind; und
einen Wickeldrehzahlberechnungsschritt (S106) eines Berechnens, wenigstens auf Grundlage des einzugebenden Initialeinstellwerts und des einzustellenden Zielwickelwinkels, einer Zielwickeldrehzahl des Wickelantriebsmotors (111) jeweils zwischen den beiden einander benachbarten Punkten.

2. Wickeldatenerzeugungsverfahren nach Anspruch 1, wobei
die Filamentwickelvorrichtung (100) einen Lageanpassungsmotor (93, 95) umfasst, welcher eine Ziellage des Wickelteils (64) in der ersten Richtung (Z) anpasst,
das Wickeldatenerzeugungsverfahren einen Lageinformationseingabeschritt (103) eines Eingebens einer Ziellageinformation des Wickelteils (64) an jedem der Punkte (P1, P2, ...) umfasst, welcher in dem Punkteinstellschritt (S102) eingestellt wird,
in dem Wickeldrehzahlberechnungsschritt (S106) die Wickeldrehzahl des Wickelantriebsmotors (111) auf Grundlage des Initialeinstellwerts, des Zielwickelwinkels und der in dem Lageinformationseingabeschritt (103) eingegebenen Ziellageinformation berechnet wird.

3. Wickeldatenerzeugungsverfahren nach Anspruch 2, wobei
in dem Lageinformationseingabeschritt (103) ein Bediener in einem Zustand eines Einstellens einer Lage des Wickelteils (64), so dass die Wickeldrehachse (A3) des Wickelteils (64) mit einer Achse des Kernmaterials (10) zusammenfällt, an jedem der Mehrzahl von Punkten (P1, P2, ...), welche in dem Punkteinstellschritt (S102) eingestellt wird, ein Lernen durchführt, um die Ziellageinformation einzugeben.

4. Wickeldatenerzeugungsverfahren nach Anspruch 2, wobei
in dem Lageinformationseingabeschritt (S103) auf Grundlage von vorab eingegebenen 3D-Daten des Kernmaterials (10) die Lage des Wickelteils (64) an jedem der Mehrzahl von Punkten (P1, P2, ...), welche in dem Punkteinstellschritt (S102) eingestellt wird, als die Ziellageinformation berechnet wird.

5. Wickeldatenerzeugungsverfahren nach einem der Ansprüche 2 bis 4, wobei
in dem Lageinformationseingabeschritt (S103) die Ziellageinformation an jedem der Mehrzahl von Punkten (P1, P2, ...) in einem Fall, in welchem der Wickelteil (64) relativ zu dem Kernmaterial (10) in der ersten Richtung (Z) zu einer Seite bewegt wird, und in einem Fall eingegeben wird, in welchem der Wickelteil (64) relativ zu dem Kernmaterial (10) in der ersten Richtung (Z) zu der anderen Seite bewegt wird.

6. Wickeldatenerzeugungsverfahren nach einem der Ansprüche 1 bis 5, wobei
jeder der Mehrzahl von Punkten (P1, P2, ...) in der ersten Richtung (Z) in gleichen Intervallen eingestellt wird.

7. Wickeldatenerzeugungsverfahren nach einem der Ansprüche 1 bis 6, wobei
der in dem Initialeinstellwerteingabeschritt (S101) eingegebene Initialeinstellwert ferner umfasst:
eine Anzahl von Faserbündeln (F);
eine Breite des Faserbündels (F); und
einen Durchmesser des Kernmaterials (10).

8. Wickeldatenerzeugungsverfahren nach einem der Ansprüche 1 bis 7, wobei
das Verfahren einen Anzeigeschritt (S105) eines Anzeigens einer Abdeckungsrate des Faserbündels (F) an einer äußeren Umfangsfläche des Kernmaterials (10) umfasst, wobei die Abdeckungsrate auf Grundlage des einzustellenden Wickelwinkels berechnet wird.

9. Filamentwickelvorrichtung (100), umfassend:
eine Schiene (11), welche sich in einer ersten Richtung (Z) erstreckt;
einen Wickelteil (64), welcher bereitgestellt ist, um ein Faserbündel (F) auf eine äußere Umfangsfläche eines Kernmaterials (10) zu wickeln;
einen Wickelantriebsmotor (111), welcher bereitgestellt ist, um den Wickelteil (64) um eine Wickeldrehachse entlang einer axialen Richtung des Kernmaterials (10) in Drehung zu versetzen;
einen Antriebssteuerabschnitt (5), welcher dazu eingerichtet ist, den Wickelantriebsmotor (111) zu steuern; und
einen Datenerzeugungsabschnitt, welcher dazu eingerichtet ist, Daten zum Steuern des Wickelantriebsmotors (111) zu erzeugen, **dadurch gekennzeichnet, dass**
ein Initialeinstellwert, eine Mehrzahl von Punkten (P1, P2, ...) und ein Zielwickelwinkel in dem Datenerzeugungsabschnitt eingestellt werden können, wobei der Initialeinstellwert eine Länge (L) in der ersten Richtung (Z) des Kernmaterials (10) in der ersten Richtung (Z) umfasst, die Mehrzahl von Punkten (P1, P2, ...) die Länge (L) des Kernmaterials (10) in der ersten Richtung (Z) teilt und der Zielwickelwinkel ein Winkel ist, welcher durch eine axiale Richtung des Kernmaterials (10) und des Faserbündels (F) zwischen zwei der Mehrzahl von Punkten (P1, P2, ...) definiert ist, welche in der ersten Richtung (Z) einander benachbart sind,
wobei der Datenerzeugungsabschnitt dazu eingerichtet ist, wenigstens auf Grundlage des einzugebenden Initialeinstellwerts und des einzustellenden Zielwickelwinkels eine Zielwickeldrehzahl des Wickelantriebsmotors (111) jeweils zwischen den beiden einander benachbarten Punkten zu berechnen.

## Revendications

1. Procédé de création de données d'enroulement pour un appareil d'enroulement de filaments (100), l'appareil d'enroulement de filaments (100) incluant un rail (11) s'étendant dans une première direction, une partie d'enroulement (64) qui enroule un faisceau de fibres (F) sur une surface périphérique extérieure d'un matériau d'âme (10), un moteur d'entraînement d'enroulement (111) qui entraîne la partie d'enroulement (64) en rotation autour d'un axe de rotation d'enroulement (A3) le long d'une direction axiale du matériau d'âme (10), et une section de commande (5) qui commande le moteur d'entraînement d'enroulement (111), le procédé de création de données d'enroulement étant **caractérisé par**
une étape de saisie de valeur de réglage initiale (S101) de saisie d'une valeur de réglage initiale incluant une longueur (L) dans la première direction (Z) du matériau d'âme (10) dans la première direction (Z);
une étape de réglage de points (S102) de réglage d'une pluralité de points (P1, P2,...) de manière à diviser la longueur du matériau d'âme (10) dans la première direction (Z);
une étape de réglage d'angle d'enroulement (S104) de réglage d'un angle d'enroulement cible qui est un angle défini par une direction axiale du matériau d'âme (10), et le faisceau de fibres (F) enroulé autour du matériau d'âme (10) entre deux de la pluralité de points (P1, P2,...) adjacents l'un à l'autre dans la première direction (Z); et
une étape de calcul de vitesse de rotation d'enroulement (S106) de calcul, au moins sur la base de la valeur de réglage initiale à saisir et de l'angle d'enroulement cible à régler, d'une vitesse de rotation d'enroulement cible du moteur d'entraînement d'enroulement (111) entre les deux points adjacents l'un à l'autre, respectivement.

2. Procédé de création de données d'enroulement selon la revendication 1, dans lequel
l'appareil d'enroulement de filaments (100) inclut un moteur d'ajustement de posture (93, 95) qui ajuste une posture cible de la partie d'enroulement (64) dans la première direction (Z),
le procédé de création de données d'enroulement inclut une étape de saisie d'informations de posture (103) de saisie d'informations de posture cible de la partie d'enroulement (64) à chacun des points (P1, P2,...) qui est réglé dans l'étape de réglage de points (S102),
dans l'étape de calcul de vitesse de rotation d'enroulement (S106), la vitesse de rotation d'enroulement du moteur d'entraînement d'enroulement (111) est calculée sur la base de la valeur de réglage initiale, de l'angle d'enroulement cible et des informations de posture cible saisies dans l'étape de saisie d'informations de posture (103).

3. Procédé de création de données d'enroulement selon la revendication 2, dans lequel
dans l'étape de saisie d'informations de posture (103), un opérateur effectue un apprentissage dans un état d'ajustement d'une posture de la partie d'enroulement (64) de sorte que l'axe de rotation d'enroulement (A3) de la partie d'enroulement (64) coïncide avec un axe du matériau d'âme (10), à chacun de la pluralité de points (P1, P2,...) qui est réglé dans l'étape de réglage de points (S102), pour saisir les informations de posture cible.

4. Procédé de création de données d'enroulement selon la revendication 2, dans lequel
dans l'étape de saisie d'informations de posture (S103), sur la base de données 3D pré-saisies du matériau d'âme (10), la posture de la partie d'enroulement (64) à chacun de la pluralité de points (P1, P2,...) qui est réglé dans l'étape de réglage de points (S102) est calculée comme informations de posture cible.

5. Procédé de création de données d'enroulement selon l'une quelconque des revendications 2 à 4, dans lequel
dans l'étape de saisie d'informations de posture (S103), les informations de posture cible à chacun de la pluralité de points (P1, P2,...) sont saisies dans un cas où la partie d'enroulement (64) est déplacée d'un côté dans la première direction (Z) par rapport au matériau d'âme (10) et un cas où la partie d'enroulement (64) est déplacée de l'autre côté dans la première direction (Z) par rapport au matériau d'âme (10).

6. Procédé de création de données d'enroulement selon l'une quelconque des revendications 1 à 5, dans lequel
chacun de la pluralité de points (P1, P2,...) est réglé à intervalles réguliers dans la première direction (Z).

7. Procédé de création de données d'enroulement selon l'une quelconque des revendications 1 à 6, dans lequel
la valeur de réglage initiale saisie dans l'étape de saisie de valeur de réglage initiale (S101) inclut en outre:
un nombre de faisceaux de fibres (F);
une largeur du faisceau de fibres (F); et
un diamètre du matériau d'âme (10).

8. Procédé de création de données d'enroulement selon l'une quelconque des revendications 1 à 7, dans lequel
le procédé inclut une étape d'affichage (S105) d'affichage d'un taux de couverture du faisceau de fibres (F) sur une surface périphérique externe du matériau d'âme (10), le taux de couverture étant calculé sur la base de l'angle d'enroulement à régler.

9. Appareil d'enroulement de filaments (100) comprenant:
un rail (11) s'étendant dans une première direction (Z);
une partie d'enroulement (64) qui est fournie pour enrouler un faisceau de fibres (F) sur une surface périphérique extérieure d'un matériau d'âme (10);
un moteur d'entraînement d'enroulement (111) qui est fourni pour entraîner la partie d'enroulement (64) en rotation autour d'un axe de rotation d'enroulement le long d'une direction axiale du matériau d'âme (10);
une section de commande d'entraînement (5) qui est adaptée pour commander le moteur d'entraînement d'enroulement (111); et
une section de création de données qui est adaptée pour créer des données pour commander le moteur d'entraînement d'enroulement (111), **caractérisé en ce que**
une valeur de réglage initiale, une pluralité de points (P1, P2,...) et un angle d'enroulement cible peuvent être réglés dans la section de création de données, la valeur de réglage initiale incluant une longueur (L) dans la première direction (Z) du matériau d'âme (10) dans la première direction (Z), la pluralité de points (P1, P2,...) qui divise la longueur (L) du matériau d'âme (10) dans la première direction (Z), l'angle d'enroulement cible est un angle défini par une direction axiale du matériau d'âme (10), et le faisceau de fibres (F) entre deux de la pluralité de points (P1, P2,...) adjacents l'un à l'autre dans la première direction (Z),
la section de création de données est adaptée pour calculer, au moins sur la base de la valeur de réglage initiale à saisir et de l'angle d'enroulement cible à régler, une vitesse de rotation d'enroulement cible du moteur d'entraînement d'enroulement (111) entre les deux points adjacents l'un à l'autre, respectivement.
